(19) Europäisches Patentamt
European Patent Office
Office européen des brevets

(11) **EP 2 471 858 B1**

## (12) EUROPEAN PATENT SPECIFICATION

(45) Date of publication and mention
of the grant of the patent:
**08.02.2017 Bulletin 2017/06**

(51) Int Cl.:
**C08L 23/10** *(2006.01)*     **C08F 297/08** *(2006.01)*

(21) Application number: **10015340.2**

(22) Date of filing: **06.12.2010**

(54) **HETEROPHASIC POLYPROPYLENE WITH IMPROVED STIFFNESS AND TRANSPARENCY AND ACCEPTABLE IMPACT STRENGTH**

HETEROPHASES POLYPROPYLEN MIT VERBESSERTER STEIFHEIT UND TRANSPARENZ UND ANNEHMBARE STOSSFESTIGKEIT

POLYPROPYLÈNE HÉTÉROPHASIQUE AGANT RIGIDITÉ ET TRANSPARENCE AMÉLIORÉES ET RÉSISTANCE À L'IMPACT ACCEPTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.07.2012 Bulletin 2012/27**

(73) Proprietor: **Borealis AG**
**1220 Vienna (AT)**

(72) Inventors:
• **Friel, David**
**4020 Linz (AT)**

• **Doshev, Petar**
**4040 Linz (AT)**
• **Gahleitner, Markus**
**4501 Neuhofen a.d.Krems (AT)**

(74) Representative: **Kador & Partner**
**Corneliusstraße 15**
**80469 München (DE)**

(56) References cited:
**EP-A1- 1 659 151      EP-A1- 1 801 156**
**EP-A1- 2 022 824      EP-A1- 2 338 656**
**EP-A2- 1 702 956**

**Description**

The present invention relates to a heterophasic polypropylene composition with high stiffness, transparency and acceptable impact properties, particularly low-temperature impact strength. Still further, the present invention is also directed to an article made of the inventive polypropylene composition, particularly a molded article. Finally, the present invention is also directed to the use of the inventive polypropylene composition for the production of molded articles, such as thin-walled plastic containers for packaging, caps and closures.

In the field of thin-wall packaging of the molding market it is of great importance to have a material combining high flowability with good mechanical properties, i.e. stiffness and acceptable impact strength. Good flowability is needed for achieving a good processability in various manufacturing methods of articles, e.g. extrusion and molding processes, thereby allowing the high production speed required in this mass production market. The mechanical properties are also critical in view of the thin-walled articles. Particularly, in the field of containers there is a need to hold the content such as food contained therein as well as having sufficient stiffness to be stacked. Finally, the materials should also withstand mechanical compression damage, which is frequently incurred by e.g. dropping the articles.

Still further, also the transparency should be acceptable. Particularly, a good balance between stiffness and transparency is desirable. However, at least some of these objectives may only be achieved at the expense of other of these objects.

Generally speaking, a high degree of crystallinity of polypropylene compositions renders the material rather stiff, however it also increases the haze. The crystallinity is influenced by the amount of comonomer contained in the propylene copolymer and by the molecular weight of the polymer chains, i.e. by the molecular weight distribution. A higher amount of comonomer means more interruption of the isotactic polypropylene units and hence less crystallinity. To a certain extent this entails improved optical properties, i.e. better haze values. However, the stiffness is reduced thereby. Hence, the balance of stiffness and transparency is of great importance.

A rather low molecular weight improves processability and crystallinity, hence stiffness, however, the impact strength is deteriorated.

Therefore, a general problem for polypropylene compositions is to reconcile the opposed requirements of high processability, stiffness, impact strength and good optical performance, i.e. low haze.

It is known in the art to combine a polypropylene homo- or copolymer matrix phase material with an elastomeric propylene-ethylene copolymer dispersed phase material (EPR rubber). These heterophasic polypropylenes often display better impact strength due to the rubber particles dispersed in the matrix phase. Particularly, the low temperature impact resistance is improved.

Since the matrix phase and the dispersed phase by definition do not build a homogeneous phase but two phases, also the optical performance may be affected due to the presence of phase boundaries in the material. If the particles of the dispersed phase are too large, i.e. reach the magnitude of the wavelength of light, the refractive indices of the matrix phase and the dispersed phase gain importance. In case of polyolefins, the refractive indices of the two phases may be tuned by controlling the density of the two phases. The size of the particles of the dispersed phase is inter alia influenced by the molecular weight or intrinsic viscosity of the two phases. Hence, an additional task is to carefully select the molecular weight or intrinsic viscosity and/or the density of the different phases.

EP 373 660 discloses a heterophasic polypropylene composition with good transparency and improved low temperature impact resistance comprising a crystalline copolymer of propylene with ethylene or an alphaolefin and an elastomeric propylene-ethylene copolymer.

In further developing said heterophasic compositions EP 1 358 266 and EP 1 702 956 disclose a heterophasic polypropylene composition for packaging applications with improved optical properties and improved impact strength comprising a propylene homo- or copolymer matrix phase, a dispersed elastomeric ethylene-propylene copolymer phase and a low density ethylene polymer component. Nucleating agents are optional additives.

EP 1 659 151 discloses a heterophasic polypropylene composition comprising a propylene homo- or copolymer matrix phase and a dispersed phase which comprises two elastomeric ethylene-propylene copolymer fractions which differ in ethylene content and intrinsic viscosity. Said composition further comprises a low density ethylene copolymer with an ethylene content of at least 80 mol%. Nucleation with known $\alpha$-nucleating agents is an option. Said compositions are suitable for molding and have a good balance between impact strength and stiffness, sufficient flowability and good optical properties.

EP 1 801 156 discloses a heterophasic polypropylene composition comprising a propylene homo- and/or copolymer matrix phase, a dispersed elastomeric ethylene-propylene copolymer phase and a low density ethylene copolymer component. A particular type of nucleating agent, namely a polymeric nucleating agent is disclosed to be essential. Said compositions are suitable for thermoforming and thin wall packaging and have good transparency.

Nevertheless, there is still a need for a heterophasic polypropylene composition which while keeping acceptable (low temperature) impact resistance has high stiffness and transparency as well as acceptable flowability.

Hence, it is an object of the present invention to provide such a material, particularly in view of applications where low wall thickness and weight saving is crucial, like in packaging solutions. Therefore it is also an object of the present invention to provide a molded article with the improved properties mentioned above, particularly an injection molded article.

The present invention is based on the finding that the above-mentioned objects can be achieved by a particular heterophasic polypropylene composition comprising

(A) 30-60 wt% of a propylene homopolymer fraction,

(B) 30-60 wt% of a propylene random copolymer fraction, wherein the comonomer is ethylene or an $\alpha$-olefin with 4 to 8 carbon atoms and the comonomer content of said random copolymer fraction is between 0.5 and 3.5 wt%,

(C) 2-15 wt% of an elastomeric ethylene-$\alpha$-olefin copolymer fraction, wherein the comonomer is an $\alpha$-olefin with 3 to 8 carbon atoms and the ethylene content of said elastomeric ethylene-$\alpha$-olefin copolymer fraction is between 20 and 60 wt%,

(D) 3-20 wt% of an ethylene homo- or copolymer fraction having a density between 905 and 920 $kg/m^3$, and

(E) 0. 001 to 1.0 wt% of an $\alpha$-nucleating agent,

wherein the xylene soluble fraction XCS of the heterophasic polypropylene composition is not more than 14.5 wt% and the tensile modulus of the heterophasic polypropylene composition is at least 1200 MPa.

The comonomer content of the propylene random copolymer fraction (B) is preferably at least 1.0 wt%, still more preferably at least 1.5 wt%.

The amount of the elastomeric ethylene-$\alpha$-olefin copolymer fraction (C) in the heterophasic polypropylene composition is preferably at least 3 wt%, more preferably at least 4 wt%.

The amount of the elastomeric ethylene-$\alpha$-olefin copolymer fraction (C) in the heterophasic polypropylene composition is preferably not higher than 13 wt%, more preferably not higher than 10 wt%.

The ethylene content of the elastomeric ethylene-$\alpha$-olefin copolymer fraction (C) is preferably between 22 and 55 wt%, more preferably between 23 and 40 wt%, most preferably between 25 and 35 wt%.

The amount of the ethylene homo- or copolymer fraction (D) in the heterophasic polypropylene composition is preferably at least 5 wt%, more preferably at least 10 wt%.

The amount of the ethylene homo- or copolymer fraction (D) in the heterophasic polypropylene composition is preferably not higher than 17 wt%, more preferably not higher than 15 wt%.

Particular preferred comonomers of the propylene random copolymer fraction (B) are selected from ethylene, 1-butene, 1-pentene, 1-hexene, 1-octene, 4-methyl-1-pentene or 3-methyl-1-pentene, or any combination of these. It is most preferred that the comonomer is ethylene.

Particular preferred comonomers of the elastomeric ethylene-$\alpha$-olefin copolymer fraction (C) are selected from propylene, 1-butene, 1-pentene, 1-hexene, 1-octene, 4-methyl-1-pentene or 3-methyl-1-pentene, or any combination of these. It is most preferred that the comonomer is propylene, i.e. that said elastomeric ethylene-$\alpha$-olefin copolymer fraction (C) is an ethylene-propylene rubber (EPR).

Preferably, said ethylene homo- or copolymer fraction (D) has an ethylene content of at least 80 mol%.

Particular preferred comonomers of the ethylene homo- or copolymer fraction (D) are selected from 1-butene, 1-pentene, 1-hexene, 1-octene, 4-methyl-1-pentene or 3-methyl-1-pentene, or any combination of these. Most preferred is that the comonomer is 1-butene or 1-hexene.

In another embodiment said fraction (D) is preferably an ethylene homopolymer fraction.

Preferably, the melt flow rate $MFR_2$ of said ethylene homo- or copolymer fraction (D) is at least 5 g/10 min. The $MFR_2$ of said ethylene homo- or copolymer fraction will be usually not higher than 100 g/10 min.

The alpha-nucleating agent (E) is usually added in small amounts of 0.001 to 1 wt%, more preferably 0.05 to 0.7 wt%, even more preferably 0.01 to 0.5 wt%. The $\alpha$-nucleating agent (E) may be any compound which acts as nucleating agent for the monoclinic $\alpha$-modification of polypropylene.

Generally speaking, two classes of $\alpha$-nucleating agents can be distinguished, namely particulate nucleating agents and soluble nucleating agents.

Particulate nucleating agents show a conventional dispersion mechanism for which particle size and polarity difference to the polymer are decisive. Examples of this class are inorganic nucleating agents like talc, but also organic nucleating agents like sodium benzoate, organophosphates and salts of p-tert-butyl benzoic acid, as well as polymeric nucleating agents like polymerised vinyl compounds such as polyvinylcyclohexane or polytetrafluoroethylene. Further details about these nucleating agents can be found e.g. in WO 99/24479 and WO 99/24501.

Soluble nucleating agents are those with a sequence of dissolution upon heating and recrystallisation upon cooling defining the degree of dispersion. In the latter case, solubility and the resulting crystal shape are decisive for the efficiency. Examples of this class are nucleating agents like sorbitol derivatives, e.g. di(alkylbenzylidene)sorbitols as 1,3:2,4-dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, e.g. 1,2,3-trideoxy-4,6;5,7-bis-O-[(4-propylphenyl)methylene] nonitol, and benzene-trisamides like substituted 1,3,5-benzenetrisamides as N,N',N''-tris-tert-butyl-1,3,5-benzenetricarboxamide, N,N',N''-tris-cyclohexyl-1,3,5-benzene-tricarboxamide and N-[3,5-bis-(2,2-dimethyl-propionylamino)-phenyl]-2,2-dimethyl-propionamide.

It is preferred that the α-nucleating agent is a soluble nucleating agent as defined above.

The xylene soluble fraction XCS of the heterophasic polypropylene composition is preferably not more than 14 wt, more preferably not more than 13 wt%, even more preferably not more than 12 wt% und most preferably not more than 11 wt%.

The xylene soluble fraction XCS of the heterophasic polypropylene composition is usually at least 4.0 wt%.

The preferred embodiments of the heterophasic polypropylene composition according to the present invention may of course be combined with each other.

However, according to a particular preferred embodiment the heterophasic polypropylene composition according to the present invention comprises

(A) 30-60 wt% of a propylene homopolymer fraction,

(B) 30-60 wt% of a propylene random copolymer fraction, wherein the comonomer is ethylene and the ethylene content of said random copolymer fraction is between 1.5 and 3.5 wt%,

(C) 3-10 wt% of an elastomeric ethylene-propylene copolymer fraction, wherein the ethylene content of said elastomeric ethylene-propylene copolymer fraction is between 20 and 60 wt%,

(D) 5-15 wt% of an ethylene homo- or copolymer fraction having an ethylene content of at least 80 mol% and a density between 905 and 920 kg/m$^3$, and

(E) 0.01 to 0.5 wt% of an α-nucleating agent,

wherein the xylene soluble fraction XCS of the heterophasic polypropylene composition is not more than 12 wt%.

Within said particular preferred embodiment it is further preferred that the α-nucleating agent is a soluble nucleating agent as defined herein.

All above described embodiments of the present invention further preferably include the following properties:

Preferably, the $MFR_2$ of the heterophasic polypropylene composition is at least 10 g/10 min, more preferably at least 15 g/10 min.

The $MFR_2$ of the heterophasic polypropylene composition will usually not be higher than 100 g/10 min.

Preferably, the ratio of intrinsic viscosity of fraction (A) to the intrinsic viscosity of combined fractions (A) and (B) is smaller than 0.9, still more preferably smaller than 0.8, still more preferably smaller than 0.7. Said ratio will be usually higher than 0.01.

Preferably, the $MFR_2$ of the propylene homopolymer fraction (A) is at least 40 g/10 min, more preferably at least 60 g/10 min, still more preferably at least 80 g/10 min.

The $MFR_2$ of the propylene homopolymer fraction (A) will usually not be higher than 1000 g/10 min.

Preferably, the $MFR_2$ of the propylene random copolymer fraction (B) is not higher than 45 g/10 min, more preferably not higher than 30 g/10 min, still more preferably not higher than 20 g/10 min.

The $MFR_2$ of the propylene random copolymer fraction (B) will usually at least 1 g/10 min.

Preferably, propylene homopolymer fraction (A) has a higher $MFR_2$-value than the propylene random copolymer fraction (B).

Preferably, the intrinsic viscosity of the elastomeric fraction (C) is not higher than 2.0 dl/g.

Preferably, the intrinsic viscosity of the elastomeric fraction (C) is at least 0.8 dl/g, more preferably at least 0.9 dl/g.

The ethylene homo- or copolymer fraction (D) will contribute to a great extent to the dispersed phase and thereby fine-tunes the density of the dispersed phase in view of the density of the matrix phase which is normally higher than the density of the dispersed phase.

The heterophasic polypropylene composition according to the present invention may be further defined by the analytical fractions which are soluble (XCS) and insoluble (XCU) in xylene, as well as the amorphous phase ($XS_{AM}$). Said analytical fractions may be further specified.

Preferably, the intrinsic viscosity of the amorphous phase $XS_{AM}$ is at least 0.8 dl/g, more preferably at least 0.9 dl/g.

Preferably, the intrinsic viscosity of the amorphous phase $XS_{AM}$ is not higher than 2.0 dl/g.

Preferably, the ethylene content of the amorphous phase $XS_{AM}$ is at least 25 wt%.

Preferably, the ethylene content of the amorphous phase $XS_{AM}$ is not higher than 65 wt%.

In one embodiment of the invention the ethylene content of the amorphous phase $XS_{AM}$ is preferably in the range of 25 wt% to below 45 wt%, more preferably 26 wt% to 35 wt%.

In one embodiment of the invention the ethylene content of the amorphous phase $XS_{AM}$ is preferably in the range of 40 wt% to 65 wt%, more preferably 45 wt% to 60 wt%.

The heterophasic polypropylene composition preferably has a crystallization temperature $T_{CR}$ of at least 124 °C, more preferably of at least 125 °C. Usually the $T_{CR}$ will be not higher than 140°C, determined by differential scanning calorimetry (DSC).

In the DSC diagram the inventive heterophasic polypropylene composition preferably exhibits two melting temperatures $T_{m,1}$ and $T_{m,2}$ and two melting enthalpies $H_{m,1}$ and $H_{m,2}$. Thereby, $T_{m,1}$ and $H_{m,1}$ are associated to the dispersed phase of the heterophasic polypropylene composition including components (C) and (D), and $T_{m,2}$ and $H_{m,2}$ are associated to the matrix phase of the heterophasic polypropylene composition including components (A) and (B).

Preferably, $T_{m,1}$ of the heterophasic polypropylene composition is within the range of 95°C to 120°C, more preferably 100°C to 115°C.

Preferably, $H_{m,1}$ of the heterophasic polypropylene composition is at least 0.5 J/g, more preferably at least 0.7 J/g. Usually, $H_{m,1}$ of the heterophasic polypropylene composition is not more than 15 J/g.

Preferably, $T_{m,2}$ of the heterophasic polypropylene composition is within the range of 150°C to 175°C, more preferably 158°C to 170°C.

Preferably, $H_{m,2}$ of the heterophasic polypropylene composition is not more than 105 J/g, more preferably not more than 99 J/g. Usually, $H_{m,2}$ of the heterophasic polypropylene composition is at least 50 J/g

The tensile modulus of the heterophasic polypropylene composition as measured on injection molded tensile bars (dog bone shape, 4 mm thickness) according to ISO 527-1 is at least 1200 MPa, more preferably at least 1300 MPa and most preferred at least 1350 MPa.

The tensile modulus of the heterophasic polypropylene composition will usually not be higher than 3000 MPa.

The Charpy notched impact strength of the heterophasic polypropylene composition at 23 °C as measured according to ISO 179-1eA is preferably in the range of 3.0 to 10.0 kJ/m$^2$.

The Charpy notched impact strength of the heterophasic polypropylene composition at 0 °C is preferably in the range of 2.0 to 7.0 kJ/m$^2$.

The Charpy notched impact strength of the heterophasic polypropylene composition at -20 °C is preferably in the range of 1.0 to 5.0 kJ/m$^2$.

Preferably, the haze of the heterophasic polypropylene composition (as determined according to ASTM D1003 on 1 mm thick injection molded plaque samples) is lower than 60 %, more preferably lower than 50 %, still more preferably lower than 40 %. The haze of the heterophasic polypropylene composition is usually higher than 1 %.

Preferably, the haze of the heterophasic polypropylene composition (as determined according to ASTM D1003 on 2 mm thick injection molded plaque samples) is lower than 90 %, more preferably lower than 80 %, still more preferably lower than 70 %. The haze of the heterophasic polypropylene composition is usually higher than 1 %.

The sum of fractions (A), (B), (C) and (D) and component (E) is 100 wt% or lower depending on the presence of further fractions or additives. The ranges in percent by weight (wt%) as used herein define the amount of each of the fractions or components based on the entire heterophasic polypropylene composition according to the present invention. All fractions and components together give a sum of 100 wt.

The heterophasic polypropylene composition according to the present invention apart from the polymeric components and the $\alpha$-nucleating agent (E) may comprise further non-polymeric components, e.g. additives for different purposes. The entirety of polymeric components constitutes the so-called base resin.

Usually any non-polymeric additives are added to the base resin by compounding.

The heterophasic polypropylene composition according to the present invention comprises two phases which are not miscible, i.e. a matrix phase and a dispersed phase. This definition and denotation is based on the final appearance of the heterophasic polypropylene composition. However, a base resin of a heterophasic polypropylene composition is usually not prepared by blending (compounding or reactor blend) two phases which are identical to the matrix phase and the dispersed phase. Instead, the base resin is received by blending (compounding or reactor blend) at least two resins or polymer fractions, wherein at least one of said resins or fractions is an elastomeric ethylene-$\alpha$-olefin copolymer (rubber) and at least one of said resins or fractions is a propylene homopolymer or a propylene random copolymer.

Most of said rubber resin or fraction will contribute to the dispersed phase of the base resin. Hence, the dispersed phase is often used as synonym for the rubber part of a heterophasic polypropylene composition. Similarly, most of the resin or fraction comprising at least a propylene homopolymer fraction or a random propylene copolymer fraction will contribute to the matrix phase of the base resin. Hence, the matrix phase is often used as synonym for the propylene homopolymer or propylene random copolymer part of a heterophasic polypropylene composition.

The heterophasic polypropylene composition according to the present invention comprises a propylene homopolymer fraction (A) and a propylene random copolymer fraction (B). As indicated above, most of said at least two fractions will contribute to the matrix phase.

The heterophasic polypropylene composition according to the present invention comprises an elastomeric ethylene-$\alpha$-olefin copolymer fraction (C). As indicated above, most of said fraction will contribute to the dispersed phase.

Said ethylene homo- or copolymer fraction (D) will contribute to a great extent to the dispersed phase.

As indicated above, the propylene homopolymer fraction (A) preferably has a higher $MFR_2$-value than the propylene random copolymer fraction (B). Hence, the propylene homopolymer fraction (A) and the propylene random copolymer fraction (B) preferably have a different weight average molecular weight.

Hence, the matrix phase is preferably multimodal, more preferably bimodal.

The heterophasic polypropylene composition according to the present invention comprises a propylene homopolymer fraction (A), a propylene random copolymer fraction (B) and an elastomeric ethylene-$\alpha$-olefin copolymer fraction (C) as further defined above. In case said at least three fractions are prepared individually and the resulting resins are compounded afterwards, the properties of the three fractions may be measured directly.

However, it is preferred according to the present invention that the at least three fractions are produced in a different reactor each, which reactors are connected in series, and each fraction is produced in the presence of the product of the preceding reactor(s) except for the first fraction.

Preferably, the ethylene homo- or copolymer fraction (D) is added after blending (compounding or reactor blend) of the at least three fractions (A) to (C) defined above in a step of compounding.

Preferably, the inventive composition comprises a propylene homo- or copolymer fraction received from a step of pre-polymerization which is carried out before the polymerization of the first fraction as defined above. More preferably, said fraction is a propylene homopolymer fraction.

Owing to the preferred sequential production of the at least three fractions (A) to (C) it is not possible to measure each of the properties of the individual at least three fractions discussed above.

Generally speaking, it is not possible to divide a final base resin or heterophasic polypropylene composition into the fractions the base resin was built-up by in the production process.

Hence, properties of the final composition or of fractions directly obtainable from the final composition as the XCU fraction, the XCS fraction and the amorphous phase $XS_{AM}$ are usually used for characterization.

The XCU fraction, the XCS fraction and the amorphous phase $XS_{AM}$ are analytical fractions. They are neither strongly related to the matrix phase and the dispersed phase of the heterophasic polypropylene composition according to the present invention nor to the at least four resins or fractions as defined above which contribute to the production of the base resin of the heterophasic polypropylene composition according to the present invention.

However, the XCS fraction gives a good idea of the dispersed phase and therefore also of the elastomeric ethylene-$\alpha$-olefin copolymer fraction (C) The XCU fraction therefore gives a good idea of the matrix phase and therefore also of the propylene homopolymer fraction (A) and the propylene random copolymer fraction (B). Of course also the matrix phase to a minor extend contributes to the XCS fraction, i.e. also part of the propylene homopolymer fraction (A) and the propylene random copolymer fraction (B). Still further, the ethylene homo- or copolymer fraction (D) contributes to the XCU fraction.

The amorphous phase $XS_{AM}$ is derived from the XCS fraction. The amorphous phase $XS_{AM}$ gives an even better idea of the dispersed phase and the elastomeric ethylene-$\alpha$-olefin copolymer fraction (C).

The heterophasic polypropylene composition according to the present invention may comprise further polyolefin fractions and may also contain non-polymeric additives.

The expression "multimodal" used herein refers to the modality of the polymer, i.e. the form of its molecular weight distribution curve, which is the graph of the molecular weight fraction as a function of its molecular weight. As is explained herein, the polymer components of the present invention can be produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions. Such a polymer, produced in two or more serial steps, is called bimodal or multimodal, depending on the number of steps.

The matrix phase is also multimodal, preferably bimodal, as regards the comonomer distribution, since it is to a great extend composed of a propylene homopolymer fraction (A) and a propylene random copolymer fraction (B) as defined above.

The present invention also provides a process for the preparation of a heterophasic polypropylene composition comprising preparation of the fractions (A), (B) and (C) as defined above in any sequence, wherein the fractions are produced in different reactors connected in series and each fraction is produced in the presence of the product produced in the preceding reactor(s) except for the first fraction. Said process further includes adding of fraction (D) and component (E) in a step of compounding.

Preferably, the reaction mixture of each of the reactors is fed directly to the following reactor in the cascade.

Preferably, the propylene homopolymer fraction (A) is produced in a bulk reactor, which still more preferably is a loop reactor.

Preferably, the propylene random copolymer fraction (B) is produced in a gas phase reactor.

Preferably, the elastomeric ethylene-α-olefin copolymer fraction (C) is produced in a gas phase reactor.

Preferably, the propylene random copolymer fraction (B) is produced after and in the presence of the propylene homopolymer fraction (A).

Preferably, the elastomeric ethylene-α-olefin copolymer fraction (C) is produced directly after and in the presence of the propylene homopolymer fraction (A) and the propylene random copolymer fraction (B).

According to a particular preferred embodiment each of said fractions (A) to (C) and optionally further fractions is produced in a different reactor, which reactors are connected in series, and each fraction is produced in the presence of the product of the preceding reactor(s) except for the first fraction in the sequence propylene homopolymer fraction (A), propylene random copolymer fraction (B), elastomeric ethylene-α-olefin copolymer fraction (C), wherein the propylene homopolymer fraction (A) is produced in a loop reactor and the propylene random copolymer fraction (B) and the elastomeric ethylene-α-olefin copolymer fraction (C) in gas phase reactors.

Preferably, in addition as a first step a pre-polymerization of a propylene homo- or copolymer fraction is carried out.

For the present invention, conventional bulk phase and gas phase reactors, which are commonly known in the relevant technical field can be used. Preferably, the bulk phase reactors are conducted in a continuous loop arrangement, i.e. so-called loop reactors.

The gas-phase polymerization reactor preferably comprises one or more vertical fluidised beds. Nitrogen and monomers in the gaseous state, as well as the catalyst are preferably fed to the reactor and the solid product is removed continuously or periodically, preferably continuously. The heat of reaction is dissipated through the use of the circulating gas that also serves to fluidise the polymer bed. Solvents are not used, thereby eliminating the need for solvent stripping, washing and drying.

The conditions for preparation of the two fractions (A) and (B) are within the limits of conventional conditions for preparation of propylene homopolymers and random copolymers and are disclosed e.g. in EP 2 014 714.

In general, the conditions for the preparation of the elastomeric copolymer fraction (C) are within the limits of conventional conditions for ethylene-propylene rubber (EPR) production. Typical conditions are disclosed e.g. in Encyclopedia of Polymer Science and Engineering, second edition, vol. 6, p. 545-558.

In the process a catalyst for the preparation of the polypropylene composition is applied. This catalyst can be any stereo-specific catalyst for propylene polymerization, which preferably is capable of catalyzing the polymerization and copolymerization of propylene and comonomers at a pressure of 500 to 10000 kPa, in particular 2500 to 8000 kPa, and at a temperature of 40 to 110 °C, in particular of 60 to 110 °C. Preferably, the catalyst comprises a high-yield Ziegler-Natta type catalyst, which can be used at high polymerization temperatures of 80 °C or more. Further preferred catalysts are metallocene catalysts.

Suitable external donors include dicyclopentyldimethoxysilane (donor D), cyclohexylmethyldimethoxysilane (donor C), diethylaminotriethoxysilane (donor U).

The Al/Do-ratio may vary to a great extend. The higher the ratio, the better the $H_2$-response thereby allowing producing polymers with higher values of $MFR_2$, consequently having a higher flowability. The ratio is usually between 2 and 60 mol/mol.

The catalyst is preferably present in the first polymerization step and is transferred together with the product to further polymerization steps.

Further information about suitable catalysts is disclosed in EP 2 014 714.

In addition to the components discussed above, the inventive heterophasic polypropylene composition may comprise conventional adjuvants, such as additives and reinforcing agents or additional impact modifiers.

The following are optional additives: process and heat stabilisers, pigments and other colouring agents allowing retaining transparency, antioxidants, antistatic agents, slip agents, UV stabilisers, acid scavengers.

Depending on the type of additive, these may be added in an amount of 0.001 to 2 wt%, based on the weight of the heterophasic polypropylene composition.

The α-nucleating agent and optionally further additives are added to the heterophasic polypropylene base resin, which is collected from the final reactor of the series of reactors. In case the base resin is prepared by compounding of the at least four fractions defined above, any additives may be added together or after said compounding step. In case of a reactor blend of fractions (A)-(C), the addition of any additives may be carried out together or after addition of the ethylene homo- or copolymer fraction (D).

Preferably, these additives are mixed into the composition prior to or during the extrusion process in a one-step compounding process. Alternatively, a master batch may be formulated, wherein the heterophasic polypropylene base resin is first mixed with only some of the additives.

For mixing, a conventional compounding or blending apparatus, e.g. a Banbury mixer, a 2-roll rubber mill, Buss-co-kneader or a twin screw extruder may be used. The twin screw extruder may be co-rotating or counter-rotating, preferably co-rotating. Preferably, the composition will be prepared by blending the additives together with the polymeric material at a temperature, which is sufficiently high to soften and plasticize the polymer. The temperatures and pressures used in the operation of the extruder are known in the art. Typically the temperature may be selected from the range of 150 to 350 °C. The pressure used for extrusion preferably is 50 to 500 bar. The polymer materials recovered from the extruder are usually in the form of pellets. These pellets are then preferably further processed, e.g. by injection molding to generate articles and products of the inventive compositions.

The compositions of the current invention are preferably used for the production of molded articles, preferably injection molded articles or injection stretch blow molded (ISBM) articles. Even more preferred is the use for the production of thin-walled containers and packaging articles, preferably plastic cups, house-wares and food packages.

Especially preferred is the use of the compositions of the current invention for producing injection molded articles.

The current invention also provides articles comprising the inventive heterophasic polypropylene composition. Preferably, these articles are produced by injection molding or injection stretch blow molding. The articles according to the invention preferably have an average wall thickness of 2 mm or less, preferably 1.5 mm or less, even more preferable of 1 mm or less. They are preferably characterized by a high transparency and have a haze of less than 60% when determined according to ASTM D1003 on an injection molded part of 1 mm thickness.

**Measurement Methods**

a) Molecular weight

The weight average molecular weight $M_w$ and the molecular weight distribution (MWD = $M_w/M_n$ wherein $M_n$ is the number average molecular weight and $M_w$ is the weight average molecular weight) is measured by a method based on ISO 16014-4:2003. A Waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark-Houwink constant K: $9.54*10^{-5}$ and a: 0.725 for PS, and K: $1.91*10^{-4}$ and a: 0.725 for PP). The ratio of $M_w$ and $M_n$ is a measure of the broadness of the distribution, since each is influenced by the opposite end of the "population".

b) Melt Flow Rate

The melt flow rate is measured as the $MFR_2$ in accordance with ISO 1133 (230 °C, 2.16 kg load) for polypropylene and in accordance with ISO 1133 (190 °C, 2.16 kg load) for polyethylene and is indicated in g/10 min. The MFR is an indication of the flowability, and hence the processability, of the polymer. The higher the melt flow rate, the lower the viscosity of the polymer.

The $MFR_2$ of a fraction (B) produced in the presence of a fraction (A) is calculated using the measured values of $MFR_2$ of fraction (A) and the mixture received after producing fraction (B) ("final"):

$$\frac{1}{(\log_{10} MFR_2(final)} = \frac{weight\ fraction(A)}{(\log_{10} MFR_2(A)} + \frac{weight\ fraction(B)}{(\log_{10} MFR_2(B)}$$

c) Xylene solubles and Amorphous phase

The xylene soluble fraction (XCS) as defined and described in the present invention is determined as follows: 2.0 g of the polymer are dissolved in 250 ml p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (wt%) can then be determined as follows:

$$XCS = (100 \times m_1 \times v_0)/(m_0 \times v_1),$$

wherein $m_0$ designates the initial polymer amount (g), $m_1$ defines the weight of residue (grams), $v_0$ defines the initial volume (ml) and $v_1$ defines the volume of the analysed sample (ml).

The fraction insoluble in p-xylene at 25 °C (XCU) is then equal to 100 wt% minus XCS.

The solution from the second 100 ml flask was treated with 200 ml of acetone under vigorous stirring. The precipitate was filtered and dried in a vacuum oven at 90 °C. This solution can be employed in order to determine the amorphous part (AM) of the polymer (wt%) using the following equation:

$$AM = (100 \times m_1 \times v_0)/(m_0 \times v_1)$$

wherein $m_0$ designates the initial polymer amount (g), $m_1$ defines the weight of residue (g), $v_0$ defines the initial volume (ml) and $v_1$ defines the volume of the analysed sample (ml).

d) Comonomer content

Quantitative Fourier transform infrared (FTIR) spectroscopy was used to quantify the amount of comonomer. Calibration was achieved by correlation to comonomer contents determined by quantitative nuclear magnetic resonance (NMR) spectroscopy.

The calibration procedure based on results obtained from quantitative $^{13}$C-NMR spectroscopy was undertaken in the conventional manner well documented in the literature.

The amount of comonomer (N) was determined as weight percent (wt%) via:

$$N = k1 \, (A / R) + k2$$

wherein A is the maximum absorbance defined of the comonomer band, R the maximum absorbance defined as peak height of the reference peak and with k1 and k2 the linear constants obtained by calibration. The band used for ethylene content quantification is selected depending if the ethylene content is random (730 cm$^{-1}$) or block-like (720 cm$^{-1}$). The absorbance at 4324 cm$^{-1}$ was used as a reference band.

e) Melting temperature, melting enthalpy, crystallization temperature

The melting temperatures $T_{m,1}$ and $T_{m,2}$ the melting enthalpies $H_{m,1}$ and $H_{m,2}$, and the crystallisation temperature $T_c$ are measured with a Mettler TA820 differential scanning calorimetry device (DSC) on $3 \pm 0.5$ mg samples according to ISO 11357-3:1999. Crystallisation and melting temperatures as well as enthalpies are obtained during 10 °C/min cooling and heating scans between 30 °C and 225 °C. Melting and crystallisation temperatures are taken as the peaks of the endotherms and exotherms, while enthalpies are obtained from integrating said peaks.

Thereby, $T_{m,1}$ and $H_{m,1}$ show the caloric properties of the dispersed phase, optionally including the compounded low density polyethylene, and $T_{m,2}$ and $H_{m,2}$ show the caloric properties of the matrix phase of the heterophasic polypropylene composition.

f) Charpy notched impact strength

Charpy notched impact is measured according to ISO 179/1eA at +23 °C, and at 0 °C and -20 °C using an injection molded test specimen (80 x 10 x 4 mm) as produced according to ISO1873.

g) Tensile strength, tensile modulus

The tensile strength, including tensile stress at yield, strain at yield and elongation at break, is measured according to ISO 527-1 (cross head speed 50 mm/min). The tensile modulus is measured according to ISO 527-1 (cross head speed 1 mm/min) using injection molded specimens according to ISO 527-2(1B), produced according to EN ISO 1873-2 (dog bone shape, 4 mm thickness).

h) Haze

Haze and transparency are determined from 1 mm or 2 mm injection molded plaque samples according to ASTM D1003.

i) Intrinsic viscosity (IV)

The intrinsic viscosity (IV) value increases with the molecular weight of a polymer. The IV values e.g. of the amorphous phase were measured according to ISO 1628-3.

j) Soluble nucleating agent

Methods for determining the dissolution and recrystallization are described for example by Kristiansen et al. in Macremolecules 38 (2005) pages 10461-10465 and by Balzano et al. in Macromolecues 41 (2008) pages 5350-5355. In detail, the dissolution and recrystallization can be monitored by means of melt rheology in dynamic mode as defined by ISO 6271-10:1999.

**Examples**

Two heterophasic polypropylene compositions have been produced in three reactors connected in series. The properties of the products obtained from the individual reactors including the final resins are given in Table 1.

The catalyst used in the polymerization processes was the commercial BCF20P catalyst (1.9 wt% Ti-Ziegler-Natta-catalyst as described in EP 591 224) of Borealis with triethyl-aluminium (TEA) as co-catalyst and dicyclo pentyl dimethoxy silane as donor. The Al/donor D ratio was 5.0.Before the actual polymerization process, the catalyst was prepolymerized in a stirred tank reactor in liquid propylene at a temperature of 30°C, a pressure of 5300 kPa and a residence time of 0.29 h.

In each of said Examples the first fraction has been produced in a loop reactor at a temperature of 75°C, a pressure of 5700 kPa and a residence time of 0.35 h, fractions two and three have been produced in gas phase reactors. For fraction two a temperature of 85°C, a pressure of 2600 kPa and a residence time of 2.2 h was used. For fraction three the parameters were varied between resins 1 and 2, using a temperature of 84°C, a pressure of 1750 kPa and a residence time of 0.92 h for resin 1 and a temperature of 70°C, a pressure of 1900 kPa and a residence time of 0.88 h for resin 2. Hydrogen feed and comonomer ratios were adjusted accordingly to reach the desired compositions as given in Table 1.

The properties of the products obtained from the individual reactors naturally are not measured on homogenized material but on reactor samples (spot samples). The properties of the final resin are measured on homogenized material, the $MFR_2$ on pellets made thereof in an extrusion mixing process as described below.

The split between the loop reactor and the first gas phase reactor is given in Table 1. The relative weight of fraction three produced in the second gas phase reactor is derivable from the xylene solubles content (XCS): Fraction three is a rubber fraction which is soluble in xylene. The difference to the value of the first two fractions gives information about the relative weight of said rubber fraction.

Both resins were mixed in a twin-screw extruder with 0.1 wt% of Pentaerythrityl-tetrakis(3-(3',5'-di-tert. butyl-4-hydroxyphenyl)-propionate, (CAS-no. 6683-19-8, trade name Irganox 1010) supplied by BASF AG,, 0.1 wt% Tris (2,4-di-t-butylphenyl) phosphate (CAS-no. 31570-04-4, trade name Irgafos 168) supplied by BASF AG, and 0.05 wt% Calcium stearate (CAS-no. 1592-23-0) supplied by Croda Polymer Additives,

Table 1:

|  | Resin 1 | Resin 2 |
| --- | --- | --- |
| Loop reactor |  |  |
| $MFR_2$ /g/10 min / IV /dl/g | 92/1.05 | 93/1.05 |
| Xylene solubles /wt% | 1.7 | 2.0 |
| Ethylene content /wt% | 0.0 | 0.0 |
| Split /wt% | 40.9 | 40.7 |
| Gas phase reactor $GPR_1$ |  |  |
| $MFR_2$ /g/10 min / IV /dl/g | 28/1.30 | 25/1.35 |
| Xylene solubles /wt% | 2.2 | 2.2 |
| Ethylene content /wt% | 1.2 | 1.3 |
| Split /wt% | 59.1 | 59.3 |
| Gas phase reactor $GPR_2$ |  |  |
| $MFR_2$ /g/10 min | 23 | 23 |
| Xylene solubles /wt% | 12.9 | 8.4 |

(continued)

| | Resin 1 | Resin 2 |
|---|---|---|
| Amorphous phase $XS_{AM}$ | 13.8 | 6.0 |
| Ethylene content $XS_{AM}$ /wt% | 27.9 | 48.7 |
| Intrinsic viscosity $XS_{AM}$ /dl/g | 1.5 | 1.75 |
| Ethylene content /wt% | 3.3 | 5.1 |
| Final resin | | |
| MFR$_2$ /g/10 min (pellet) | 23 | 21 |
| Xylene solubles /wt% | 10.3 | 7.9 |
| Amorphous phase $XS_{AM}$ | 8.2 | 6.2 |
| Ethylene content $XS_{AM}$ /wt% | 28.8 | 52.0 |
| Intrinsic viscosity $XS_{AM}$ /dl/g | 1.5 | 1.8 |
| Ethylene content /wt% | 3.2 | 5.6 |

Each of resins 1 and 2 forms the basis of a series of Examples. Analytical results are shown in Tables 2 to 6. The two resins 1 and 2 were tested without further additives (Comparative Examples 1 and 2) and after addition of two different $\alpha$-nucleating agents but without addition of a low density polyethylene fraction (Comparative Examples 3, 4, 5 and 6). For the inventive examples three different amounts of a low density polyethylene fraction have been added for both resins 1 and 2 and both $\alpha$-nucleating agents resulting in twelve inventive examples (Examples 1 to 12). All mixing steps were performed in twin-screw extruders.

-Millad 3988 (supplied by Milliken Inc.) is 1,3 : 2,4 Bis(3,4-dimethylbenzylidene)sorbitol, CAS-no. 135861-56-2.

Irgaclear XT 386 (supplied by Ciba) is N-[3,5-bis-(2,2-dimethyl-propionylamino)-phenyl]-2,2-dimethyl-propionamide, CAS-no. 745070-61-5.

CA9150 is a low density ethylene homopolymer from a high-pressure process having an MFR$_2$ at 190°C of 15 g/10 min and a density of 915 kg/m$^3$ and is commercially available from Borealis.

Table 2: Resins without nucleating agent

| | Comp. Ex. 1 | Comp. Ex. 2 |
|---|---|---|
| Base | Resin 1 | Resin 2 |
| CA9150 /wt% | 0.0 | 0.0 |
| MFR$_2$ /g/10 min | 23 | 21 |
| $T_{m,1}$ /°C | 102 | 120 |
| $T_{m,2}$ /°C | 160 | 160 |
| $H_{m,1}$ /J/g | 0.2 | 0.2 |
| $H_{m,2}$ /J/g | 93.2 | 94.0 |
| $T_c$/°C | 122 | 123 |
| Charpy /kJ/m$^2$, 23 °C | 4.9 | 3.4 |
| Charpy /kJ/m$^2$, 0 °C | 2.1 | 2.0 |
| Charpy /kJ/m$^2$, -20 °C | - | - |
| Tensile Modulus /MPa | 1438 | 1545 |
| Haze /%, 1 mm plaques | - | - |
| Haze /%, 2 mm plaques | - | - |

Table 3: Resin 1 with 1700 ppm Millad 3988

| | Comp. Ex. 3 | Ex. 1 | Ex. 2 | Ex. 3 |
|---|---|---|---|---|
| CA9150 /wt% | 0 | 3 | 5 | 10 |
| MFR$_2$ /g/10 min | 22 | 22 | 22 | 22 |
| $T_{m,1}$ /°C | 102 | 102 | 102 | 102 |
| $T_{m,2}$ /°C | 162 | 162 | 162 | 162 |
| $H_{m,1}$ /J/g | 0.2 | 0.7 | 1.7 | 5.9 |

(continued)

|  | Comp. Ex. 3 | Ex. 1 | Ex. 2 | Ex. 3 |
|---|---|---|---|---|
| $H_{m,2}$ /J/g | 93.8 | 94.4 | 92.7 | 89.6 |
| $T_c$/°C | 127 | 127 | 128 | 127 |
| Charpy /kJ/m$^2$, 23 °C | 4.5 | 5.0 | 5.2 | 5.8 |
| Charpy /kJ/m$^2$, 0 °C | 2.3 | 2.8 | 2.6 | 2.7 |
| Charpy /kJ/m$^2$, -20 °C | 1.5 | 1.6 | 1.3 | 1.6 |
| Tensile Modulus /MPa | 1488 | 1538 | 1417 | 1302 |
| Haze /%, 1 mm plaques | 88 | 52 | 41 | 28 |
| Haze /%, 2 mm plaques | 98 | 83 | 71 | 56 |

Table 4: Resin 1 with 200 ppm Irgaclear XT 386

|  | Comp. Ex. 4 | Ex. 4 | Ex. 5 | Ex. 6 |
|---|---|---|---|---|
| CA9150 /wt% | 0 | 3 | 5 | 10 |
| $MFR_2$ /g/10 min | 22 | 22 | 22 | 22 |
| $T_{m,1}$ /°C | 102 | 102 | 102 | 102 |
| $Tm._1$ /°C | 162 | 161 | 162 | 162 |
| $H_{m,1}$ /J/g | 0.2 | 0.8 | 2.0 | 5.7 |
| $H_{m,2}$ /J/g | 94.5 | 92.5 | 91.0 | 89.4 |
| $T_c$/°C | 127 | 127 | 127 | 126 |
| Charpy /kJ/m$^2$, 23 °C | 4.7 | 5.3 | 5.5 | 6.4 |
| Charpy /kJ/m$^2$, 0 °C | 2.7 | 2.7 | 2.8 | 2.9 |
| Charpy /kJ/m$^2$, -20 °C | - | - | - | - |
| Tensile Modulus /MPa | 1533 | 1476 | 1448 | 1349 |
| Haze /%, 1 mm plaques | 87 | 54 | 42 | 23 |
| Haze /%, 2 mm plaques | 99 | 87 | 79 | 60 |

Table 5: Resin 2 with 1700 ppm Millad 3988

|  | Comp. Ex. 5 | Ex. 7 | Ex. 8 | Ex. 9 |
|---|---|---|---|---|
| CA9150 /wt% | 0 | 3 | 5 | 10 |
| $MFR_2$ /g/10 min | 21 | 21 | 20 | 20 |
| $T_{m,1}$ /°C | 120 | 105 | 105 | 105 |
| $T_{m,2}$ /°C | 162 | 162 | 162 | 162 |
| $H_{m,1}$ /J/g | 0.2 | 0.8 | 1.9 | 3.9 |
| $H_{m,2}$ /J/g | 94.5 | 96.2 | 91.1 | 89.8 |
| $T_c$/°C | 128 | 127 | 128 | 128 |
| Charpy /kJ/m$^2$, 23 °C | 3.2 | 3.6 | 3.6 | 3.6 |
| Charpy /kJ/m$^2$, 0 °C | 2.4 | 2.4 | 2.3 | 2.3 |
| Charpy /kJ/m$^2$, -20 °C | 1.8 | 1.8 | 1.7 | 1.7 |
| Tensile Modulus /MPa | 1572 | 1525 | 1550 | 1550 |
| Haze /%, 1 mm plaques | 92 | 67 | 73 | 78 |
| Haze /%, 2 mm plaques | 99 | 93 | 96 | 96 |

Table 6: Resin 2 with 200 ppm Irgaclear XT 386

|  | Comp. Ex. 6 | Ex. 10 | Ex. 11 | Ex. 12 |
|---|---|---|---|---|
| CA9150 /wt% | 0 | 3 | 5 | 10 |

(continued)

| | Comp. Ex. 6 | Ex. 10 | Ex. 11 | Ex. 12 |
|---|---|---|---|---|
| $MFR_2$ /g/10 min | 21 | 20 | 20 | 20 |
| $T_{m,1}$ /°C | 120 | 105 | 105 | 105 |
| $T_{m,2}$ /°C | 161 | 162 | 161 | 162 |
| $H_{m,1}$ / J/g | 0.2 | 0.9 | 2.0 | 5.5 |
| $H_{m,2}$ / J/g | 93.5 | 92.0 | 89.5 | 88.3 |
| $T_c$/°C | 127 | 126 | 127 | 127 |
| Charpy /kJ/m$^2$, 23 °C | 3.8 | 3.7 | 3.5 | 4.1 |
| Charpy /kJ/m$^2$, 0 °C | 2.4 | 2.5 | 2.5 | 2.5 |
| Charpy /kJ/m$^2$, -20 °C | - | - | - | |
| Tensile Modulus /MPa | 1668 | 1653 | 1604 | 1505 |
| Haze /%, 1 mm plaques | 93 | 80 | 63 | 33 |
| Haze /%, 2 mm plaques | 99 | 98 | 95 | 75 |

The examples according to the invention show improved optical properties in decreasing haze at increasing amount of low density polyethylene and good mechanical properties with a tensile modulus of more than 1300 MPa at acceptable impact properties.

By comparing the examples in Tables 3 to 6 it can be seen that after compounding resin 2, having an ethylene comonomer content in the amorphous phase of 52.0 wt%, with the low density polyethylene $T_{m,1}$ deceases (Comp. Ex. 5-6, Ex. 7-12), whereas $T_{m,1}$ of resin 1, having an ethylene comonomer content in the amorphous phase of 28.8 wt%, remains constant after compounding with the low density polyethylene (Comp. Ex. 7-8, Ex. 1-6).

## Claims

1. A heterophasic polypropylene composition comprising

    (A) 30-60 wt% of a propylene homopolymer fraction,
    (B) 30-60 wt% of a propylene random copolymer fraction, wherein the comonomer is ethylene or an $\alpha$-olefin with 4 to 8 carbon atoms and the comonomer content of said random copolymer fraction is between 0.5 and 3.5 wt%,
    (C) 2-15 wt% of an elastomeric ethylene-$\alpha$-olefin copolymer fraction, wherein the comonomer is an $\alpha$-olefin with 3 to 8 carbon atoms and the ethylene content of said elastomeric ethylene-$\alpha$-olefin copolymer fraction is between 20 and 60 wt%,
    (D) 3-20 wt% of an ethylene homo- or copolymer fraction having a density between 905 and 920 kg/m$^3$, and
    (E) 0.001 to 1.0 wt% of an $\alpha$-nucleating agent,

    wherein the xylene soluble fraction XCS of the heterophasic polypropylene composition is not more than 14.5 wt% and the tensile modulus of the heterophasic polypropylene composition is at least 1200 MPa.

2. The heterophasic polypropylene composition according to claim 1, wherein the comonomer in the propylene random copolymer fraction (B) is ethylene.

3. The heterophasic polypropylene composition according to claim 1 or 2, wherein the comonomer in the elastomeric ethylene-$\alpha$-olefin copolymer fraction (C) is propylene.

4. The heterophasic polypropylene composition according to claim 3, wherein the amount of elastomeric ethylene-propylene copolymer fraction (C) is in the range of 3 to 10 wt%.

5. The heterophasic polypropylene composition according to any one of the preceding claims having a $MFR_2$ of at least 10 g/10 min, determined in accordance with ISO 1133 at a load of 2.16 kg and a temperature of 230°C.

6. The heterophasic polypropylene composition according to any one of the preceding claims, wherein the heterophasic polypropylene composition includes an amorphous phase as analytical fraction which has an intrinsic viscosity of 0.8 to 2.0 dl/g, determined in accordance with ISO 1628-3.

7. The heterophasic polypropylene composition according to any one of the preceding claims, wherein the heterophasic polypropylene composition includes an amorphous phase as analytical fraction which has an ethylene content of 25 wt% to 65 wt%, determined by FTIR spectroscopy..

8. The heterophasic polypropylene composition according to any one of the preceding claims, wherein the ethylene homo- or copolymer fraction (D) has an ethylene content of at least 80 mol%.

9. The heterophasic polypropylene composition according to any one of the preceding claims comprising

(A) 30-60 wt% of a propylene homopolymer fraction,
(B) 30-60 wt% of a propylene random copolymer fraction, wherein the comonomer is ethylene and the ethylene content of said random copolymer fraction is between 1.5 and 3.5 wt%,
(C) 3-10 wt% of an elastomeric ethylene-propylene copolymer fraction, wherein the ethylene content of said elastomeric ethylene-propylene copolymer fraction is between 20 and 60 wt%,
(D) 5-15 wt% of an ethylene homo- or copolymer fraction having an ethylene content of at least 80 mol% and a density between 905 and 920 kg/m$^3$, and
(E) 0.01 to 0.5 wt% of an $\alpha$-nucleating agent,

wherein the xylene soluble fraction XCS of the heterophasic polypropylene composition is not more than 12 wt%.

10. The heterophasic polypropylene composition according to any one of the preceding claims, wherein the $\alpha$-nucleating agent is a soluble nucleating agent.

11. Use of a heterophasic polypropylene composition according to any one of claims 1 to 10 for the production of molded articles.

12. Article comprising a heterophasic polypropylene composition according to any one of claims 1 to 10.

13. The article according to claim 12, wherein the article is an injection molded article having an average wall thickness of 2 mm or less.

14. The article according to claim 13 having a haze of less than 60 %, when determined according to ASTM D 1033 on an injection molded part of 1 mm thickness.

**Patentansprüche**

1. Heterophasische Polypropylenzusammensetzung, umfassend:

(A) 30 - 60 Gew.-% von einem Propylenhomopolymeranteil,
(B) 30 - 60 Gew.-% von einem Random-Propylencopolymeranteil, wobei das Comonomer Ethylen oder ein $\alpha$-Olefin mit 4 bis 8 Kohlenstoffatomen ist und der Comonomergehalt von dem Random-Copolymeranteil zwischen 0,5 und 3,5 Gew.-% liegt,
(C) 2 - 15 Gew.-% von einem elastomeren Ethylen-$\alpha$-Olefin-Copolymeranteil, wobei das Comonomer ein $\alpha$-Olefin mit 3 bis 8 Kohlenstoffatomen ist und der Ethylengehalt des elastomeren Ethylen-$\alpha$-Olefin-Copolymeranteils zwischen 20 und 60 Gew.-% liegt,
(D) 3 - 20 Gew.-% von einem Ethylenhomo- oder Copolymeranteil, der eine Dichte zwischen 905 und 920 kg/m$^3$ aufweist, und
(E) 0,001 bis 1,0 Gew.-% von einem $\alpha$-Nukleierungsmittel,

wobei der xylollösliche Anteil XCS von der heterophasischen Polypropylenzusammensetzung nicht mehr als 14,5 Gew.-% beträgt und der Zugmodul der heterophasischen Polypropylenzusammensetzung mindestens 1200 MPa beträgt.

2. Heterophasische Polypropylenzusammensetzung nach Anspruch 1, wobei das Comonomer in dem Random-Propylencopolymeranteil (B) Ethylen ist.

3. Heterophasische Polypropylenzusammensetzung nach Anspruch 1 oder 2, wobei das Comonomer in dem elastomeren Ethylen-$\alpha$-Olefin-Copolymeranteil (C) Propylen ist.

4. Heterophasische Polypropylenzusammensetzung nach Anspruch 3, wobei die Menge des elastomeren Ethylen-Propylen-Copolymeranteils (C) in dem Bereich von 3 bis 10 Gew.-% liegt.

5. Heterophasische Polypropylenzusammensetzung nach einem der vorhergehenden Ansprüche, die einen $MFR_2$ von mindestens 10 g/10 min aufweist, bestimmt gemäß ISO 1133 unter einer Last von 2,16 kg und bei einer Temperatur von 230 °C.

6. Heterophasische Polypropylenzusammensetzung nach einem der vorhergehenden Ansprüche, wobei die heterophasische Polypropylenzusammensetzung eine amorphe Phase als analytischen Anteil umfasst, die eine intrinsische Viskosität von 0,8 bis 2,0 dl/g aufweist, bestimmt gemäß ISO 1628-3.

7. Heterophasische Polypropylenzusammensetzung nach einem der vorhergehenden Ansprüche, wobei die heterophasische Polypropylenzusammensetzung eine amorphe Phase als analytischen Anteil umfasst, die einen Ethylengehalt von 25 Gew.-% bis 65 Gew.-% aufweist, bestimmt mittels FTIR-Spektroskopie.

8. Heterophasische Polypropylenzusammensetzung nach einem der vorhergehenden Ansprüche, wobei der Ethylenhomo- oder Copolymeranteil (D) einen Ethylengehalt von mindestens 80 Mol-% aufweist.

9. Heterophasische Polypropylenzusammensetzung nach einem der vorhergehenden Ansprüche, umfassend:

(A) 30 - 60 Gew.-% von einem Propylenhomopolymeranteil,
(B) 30 - 60 Gew.-% von einem Random-Propylencopolymeranteil, wobei das Comonomer Ethylen und der Ethylengehalt von dem Random-Copolymeranteil zwischen 1,5 und 3,5 Gew.-% liegt,
(C) 3 - 10 Gew.-% von einem elastomeren Ethylen-PropylenCopolymeranteil, wobei der Ethylengehalt des elastomeren Ethylen-Propylen-Copolymeranteils zwischen 20 und 60 Gew.-% liegt,
(D) 5 - 15 Gew.-% von einem Ethylenhomo- oder Copolymeranteil, der einen Ethylengehalt von mindestens 80 Mol-% und eine Dichte zwischen 905 und 920 kg/m$^3$ aufweist, und
(E) 0,01 bis 0,5 Gew.-% von einem $\alpha$-Nukleierungsmittel,

wobei der xylollösliche Anteil XCS von der heterophasischen Polypropylenzusammensetzung nicht mehr als 12 Gew.-% beträgt.

10. Heterophasische Polypropylenzusammensetzung nach einem der vorhergehenden Ansprüche, wobei das $\alpha$-Nukleierungsmittel ein lösliches Nukleierungsmittel ist.

11. Verwendung einer heterophasischen Polypropylenzusammensetzung nach einem der Ansprüche 1 bis 10 zur Herstellung von Formartikeln.

12. Artikel, umfassend eine heterophasische Polypropylenzusammensetzung nach einem der Ansprüche 1 bis 10.

13. Artikel nach Anspruch 12, wobei der Artikel ein spritzgegossener Artikel ist, der eine durchschnittliche Wanddicke von 2 mm oder weniger aufweist.

14. Artikel nach Anspruch 13, der eine Trübung von weniger als 60 % aufweist, wenn diese gemäß ASTM D 1033 an einem spritzgegossenen Teil mit 1 mm Dicke gemessen wird.

**Revendications**

1. Composition de polypropylène hétérophasique comprenant

(A) de 30 à 60 % en poids d'une fraction homopolymère de propylène,
(B) de 30 à 60 % en poids d'une fraction copolymère aléatoire de propylène, le comonomère étant de l'éthylène ou une $\alpha$-oléfine comportant de 4 à 8 atomes de carbone et la teneur en comonomère de ladite fraction copolymère aléatoire se situant entre 0,5 et 3,5 % en poids,

(C) de 2 à 15 % en poids d'une fraction copolymère d'éthylène-α-oléfine élastomère, le comonomère étant une α-oléfine comportant de 3 à 8 atomes de carbone et la teneur en éthylène de ladite fraction copolymère d'éthylène-α-oléfine élastomère se situant entre 20 et 60 % en poids,
(D) de 3 à 20 % en poids d'une fraction homo- ou copolymère d'éthylène ayant une densité située entre 905 et 920 kg/m$^3$, et
(E) de 0,001 à 1,0 % en poids d'un agent d'α-nucléation,

dans laquelle la fraction soluble dans le xylène XCS de la composition de polypropylène hétérophasique n'est pas supérieure à 14,5 % en poids et le module d'élasticité en traction de la composition de polypropylène hétérophasique est d'au moins 1 200 MPa.

2. Composition de polypropylène hétérophasique selon la revendication 1, dans laquelle le comonomère de la fraction copolymère aléatoire de propylène (B) est l'éthylène.

3. Composition de polypropylène hétérophasique selon la revendication 1 ou 2, dans laquelle le comonomère de la fraction copolymère d'éthylène-α-oléfine élastomère (C) est le propylène.

4. Composition de polypropylène hétérophasique selon la revendication 3, dans laquelle la quantité de fraction copolymère d'éthylène-propylène élastomère (C) se situe dans la plage de 3 à 10 % en poids.

5. Composition de polypropylène hétérophasique selon l'une quelconque des revendications précédentes ayant un MFR$_2$ d'au moins 10 g/10 min, déterminé selon la norme ISO 1133 à une charge de 2,16 kg et une température de 230 °C.

6. Composition de polypropylène hétérophasique selon l'une quelconque des revendications précédentes, dans laquelle la composition de polypropylène hétérophasique inclut une phase amorphe en tant que fraction analytique qui a une viscosité intrinsèque de 0,8 à 2,0 dl/g, déterminée selon la norme ISO 1628-3.

7. Composition de polypropylène hétérophasique selon l'une quelconque des revendications précédentes, dans laquelle la composition de polypropylène hétérophasique inclut une phase amorphe en tant que fraction analytique qui a une teneur en éthylène de 25 % en poids à 65 % en poids, déterminée par spectroscopie FTIR.

8. Composition de polypropylène hétérophasique selon l'une quelconque des revendications précédentes, dans laquelle la fraction homo- ou copolymère d'éthylène (D) a une teneur en éthylène d'au moins 80 % en mole.

9. Composition de polypropylène hétérophasique selon l'une quelconque des revendications précédentes comprenant

(A) de 30 à 60 % en poids d'une fraction homopolymère de propylène,
(B) de 30 à 60 % en poids d'une fraction copolymère aléatoire de propylène, le comonomère étant de l'éthylène et la teneur en éthylène de ladite fraction copolymère aléatoire se situant entre 1,5 et 3,5 % en poids,
(C) de 3 à 10 % en poids d'une fraction copolymère d'éthylène-propylène élastomère, la teneur en éthylène de ladite fraction copolymère d'éthylène-propylène élastomère se situant entre 20 et 60 % en poids,
(D) de 5 à 15 % en poids d'une fraction homo- ou copolymère d'éthylène ayant une teneur en éthylène d'au moins 80 % en mole et une densité située entre 905 et 920 kg/m$^3$, et
(E) de 0,01 à 0,5 % en poids d'un agent d'α-nucléation,

dans laquelle la fraction soluble dans le xylène XCS de la composition de polypropylène hétérophasique n'est pas supérieure à 12 % en poids.

10. Composition de polypropylène hétérophasique selon l'une quelconque des revendications précédentes, dans laquelle l'agent d'α-nucléation est un agent de nucléation soluble.

11. Utilisation d'une composition de polypropylène hétérophasique selon l'une quelconque des revendications 1 à 10 pour la production d'articles moulés.

12. Article comprenant une composition de polypropylène hétérophasique selon l'une quelconque des revendications 1 à 10.

**13.** Article selon la revendication 12, lequel article est un article moulé par injection ayant une épaisseur de paroi moyenne inférieure ou égale à 2 mm.

**14.** Article selon la revendication 13 ayant un trouble inférieur à 60 %, lorsqu'il est déterminé selon la norme ASTM D 1033 sur une pièce moulée par injection de 1 mm d'épaisseur.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 373660 A
- EP 1358266 A
- EP 1702956 A
- EP 1659151 A
- EP 1801156 A
- WO 9924479 A
- WO 9924501 A
- EP 2014714 A
- EP 591224 A

**Non-patent literature cited in the description**

- Encyclopedia of Polymer Science and Engineering. vol. 6, 545-558
- **KRISTIANSEN et al.** *Macremolecules,* 2005, vol. 38, 10461-10465
- **BALZANO et al.** *Macromolecues,* 2008, vol. 41, 5350-5355